Europäisches Patentamt

European Patent Office

Office européen des brevets

(11) Veröffentlichungsnummer: **0 013 703**
**A1**

(12) **EUROPÄISCHE PATENTANMELDUNG**

(21) Anmeldenummer: 79104481.1

(51) Int. Cl.³: **F 16 K 7/06**

(22) Anmeldetag: 13.11.79

(30) Priorität: 22.01.79 DE 2902356

(43) Veröffentlichungstag der Anmeldung: 06.08.80
Patentblatt 80/16

(84) Benannte Vertragsstaaten: **AT BE CH FR GB IT NL**

(71) Anmelder: **SIEMENS AKTIENGESELLSCHAFT Berlin und München, Postfach 22 02 61, D-8000 München 22 (DE)**

(72) Erfinder: **Mair, Eduard, Allgäuerstrasse 79/II, D-8000 München 71 (DE)**
Erfinder: **Zoeke, Siegfried, Balanstrasse 77, D-8000 München 80 (DE)**

(54) **Ventil.**

(57) In eine Leitung (L1 bzw. L2) ist ein elastisches Schlauchstück (S1 bzw. S2) eingefügt. Es ist eine Einrichtung (ER) mit einer Rolle (RL) vorgesehen, die die Rolle gegen das Schlauchstück (S1 bzw. S2) drückt und dabei den Innenquerschnitt des Schlauchstückes bis auf null verändert. Auf diese Weise kann eine durch die Leitung mit dem Schlauchstück hindurchfließende Strömung unterbrochen werden.

EP 0 013 703 A1

SIEMENS AKTIENGESELLSCHAFT       Unser Zeichen
Berlin und München              VPA 79 P 2 0 0 1 EUR

Ventil

Die Erfindung bezieht sich auf ein Ventil zur Umsteuerung
und Absperrung eines eine Leitung durchströmenden Gas-bzw.
Flüssigkeitsstromes.

Häufig muß ein Gasstrom bzw. Flüssigkeitsstrom mit Hilfe
eines Ventils umgesteuert oder abgesperrt werden. Dies soll
bei geringem Durchströmungswiderstand geschehen, soll im
druckfreien Zustand des Ventils und auch bei Durchfluß von
aggresiven Medien möglich sein.

Die der Erfindung zugrundeliegende Aufgabe besteht darin,
ein derartiges Ventil anzugeben, das kleine Abmessungen
aufweist und mit einem niedrigen Preis herstellbar ist. Diese
Aufgabe wird dadurch gelöst, daß in die Leitung ein elastisches Schlauchstück eingefügt ist, und daß eine Einrichtung
mit einer Rolle vorgesehen ist, die die Rolle gegen das
Schlauchstück drückt und dabei den Innenquerschnitt des
Schlauchstückes bis auf null verändert.

18.1.79 / Il 1 Pe

Vorteilhaft ist es, wenn die Einrichtung eine Welle enthält, an der mindestens ein Arm fest angeordnet ist. Die
Rolle kann dann am äußeren Ende des Armes gelagert werden.

Es ist zweckmäßig, an der der Einrichtung gegenüberliegenden Seite des Schlauchstückes eine Druckplatte anzuordnen,
gegen die dann die Rolle das Schlauchstück andrückt.

Soll eine Tandemanordnung mit in zwei Leitungen eingefügten
Schlauchstücken, die alternierend abgesperrt werden, geschaffen werden, dann ist es zweckmäßig, die Einrichtung
zwischen den beiden Schlauchstücken anzuordnen.

Anhand eines Ausführungsbeispiels, das in den Figuren dargestellt ist und das eine Tandemanordnung zeigt, wird die Erfindung weiter erläutert.
Fig.1 zeigt diese Tandemanordnung in Draufsicht,
Fig.2 einen Querschnitt durch die Tendemanordnung.

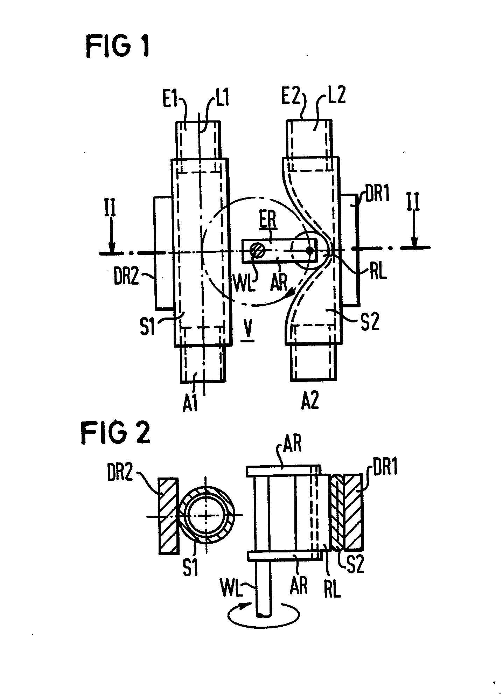

In Figur 1 und 2 sind zwei Leitungen L1 und L2 gezeigt, durch
die jeweils ein Gasstrom hindurchgehen kann. Die Leitungen
L1 und L2 haben jeweils einen Eingang E1 bzw. E2 und einen
Ausgang A1 und A2. Um den Gasstrom, der die Leitungen L1
und L2 durchströmt, unterbrechen zu können, wird in die Leitungen L1 bzw. L2 ein Ventil V eingefügt. Es besteht aus
jeweils einem Schlauchstück S1 bzw. S2, und einer Einrichtung
ER, mit deren Hilfe der Innenquerschnitt der Schlauchstücke
S1 bzw. S2 bis auf null verändert werden kann und damit der
Durchfluß unterbrochen werden kann.

Die Einrichtung ER ist dazu mit einer Rolle RL versehen, die
das Schlauchstück S1 bzw. S2 zusammendrückt und damit den
Innenquerschnitt verändert. Die Rolle RL kann z.B. auf einer
Kreisbahn geführt werden. Dann kann die Einrichtung ER eine

79 P 2 0 0 1 EUR

Welle enthalten, an der mindestens ein Arm AR fest angeordnet ist. Im Ausführungsbeispiel sind jedoch zwei Arme AR
vorgesehen. Am äußeren Ende der Arme AR ist dann die Rolle
RL gelagert.

Durch Drehung der Welle WL kann auch die Rolle RL in Bewegung
gesetzt werden. Sie führt eine Kreisbewegung aus und kommt
dabei in den Bereich der Schlauchstücke S1 bzw. S2. Die Rolle
RL drückt jeweils ein Schlauchstück S1 bzw. S2 zusammen und
verändert den Innenquerschnitt bis auf null. Wird die Rolle
RL auf der Kreisbahn weiterbewegt, so nimmt das Schlauchstück
S1 bzw. S2 aufgrund seiner hochelastischen Eigenschaft
wieder seine Ausgangsform an und erweitert seinen inneren
Querschnitt so lange, bis seine Kreisform und damit sein
größter innerer Querschnitt wieder erreicht ist.

Zweckmäßigerweise wird auf den der Einrichtung ER gegenüberliegenden Seiten der Schlauchstücke S1 und S2 jeweils eine
Druckplatte DR angeordnet. Gegen diese Druckplatten DR kann
dann das Schlauchstück durch die Rolle RL angedrückt werden.

In Figur 1 und Figur 2 ist eine Tandemanordnung dargestellt.
Dabei ist das Schlauchstück S2 durch die Rolle RL so zusammengedrückt, daß deren Innenquerschnitt null ist. Dagegen hat
das Schlauchstück S1 seinen größten inneren Querschnitt.
Durch die Anordnung der Einrichtung ER zwischen den beiden
Schlauchstücken S1 und S2 können die Strömungen durch die
Leitungen L1 und L2 alternierend abgesperrt werden. Dazu
kann z.B. die Welle WL durch einen Synchronmotor angetrieben werden.

Ein Vorteil des erfindungsgemäßen Ventils besteht darin,
daß alle beweglichen Teile an der Außenseite der Leitungen
L1 und L2 angeordnet sind und somit der Gas-bzw. Flüssigkeits-

79 P 2 0 0 1 EUR

strom ungehindert in laminarer Strömung den sperrfähigen
Abschnitt des Ventils in beliebiger Richtung durchströmen
kann, ohne daß sich der Strömungswiderstand verändert. Dies
gilt auch für aggresive Medien.


4 Patentansprüche
2 Figuren

-1-

Patentansprüche

1. Ventil zur Umsteuerung und Absperrung eines eine Leitung durchströmenden Gasstromes oder Flüssigkeitsstromes, d a - d u r c h   g e k e n n z e i c h n e t, daß in die Leitung (L1, L2) ein elastisches Schlauchstück (S1, S2) eingefügt ist, daß eine Einrichtung (ER) mit einer Rolle (RL) vorgesehen ist, die die Rolle (RL) gegen das Schlauchstück (S1,S2) drückt und dadurch den Innenquerschnitt des Schlauchstückes bis auf null verändert.

2. Ventil nach Anspruch 1, g e k e n n z e i c h n e t durch die Einrichtung aus einer Welle (WL), an der mindestens ein Arm (AR) fest angeordnet ist, und durch die Rolle (RL), die am äußeren Ende des Armes gelagert ist.

3. Ventil nach Anspruch 1 oder 2, d a d u r c h   g e k e n n - z e i c h n e t, daß auf der der Rolle (RL) gegenüberliegenden Seite des Schlauchstückes (S1, S2) eine Druckplatte (DR1, DR2) angeordnet ist.

4. Ventil nach einem der vorhergehenden Ansprüche, d a - d u r c h   g e k e n n z e i c h n e t, daß zwei Schlauchstücke (S1, S2) parallel zueinander angeordnet sind und daß zwischen den Schlauchstücken die Einrichtung (ER) angeordnet ist.

FIG 1

FIG 2

**Europäisches Patentamt**

# EUROPÄISCHER RECHERCHENBERICHT

Nummer der Anmeldung

EP 79104481.1

| | EINSCHLÄGIGE DOKUMENTE | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | **F 16 K 7/06** |
| X | FR - A - 1 358 478 (FREMION)<br><br>+ Gesamt +<br><br>-- | 1-3 | |
| X | US - A 3 693 932 (BLOHM)<br><br>+ Gesamt ÷<br><br>-- | 1-3 | |
| X | US - A - 3 511 468 (YOUNG)<br><br>+ Gesamt +<br><br>-- | 1-3 | **RECHERCHIERTE SACHGEBIETE (Int. Cl.3)** |
| A | DE - C - 845 292 (BOSSONG)<br><br>+ Gesamt +<br><br>-- | 4 | **F 16 K 7/00**<br><br>**F 16 K 31/00** |
| X | US - A - 3 016 915 (MOELLER)<br><br>+ Gesamt +<br><br>-- | 1-4 | |
| A | US - A - 3 861 421 (THOMPSON)<br><br>+ Gesamt +<br><br>---- | 4 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 19-03-1980 | PALLA |

EPA form 1503.1 06.78